# EUROPEAN PATENT SPECIFICATION

(11) **EP 3 734 632 B1**
(45) Date of publication and mention of the grant of the patent: **13.04.2022**
(21) Application number: 19864778.6
(22) Date of filing: 22.01.2019
(51) Int. Cl.: H01H 35/36, H01H 35/28, G01L 7/04, H01H 71/46

(54) **METHOD FOR IMPROVING GAS DENSITY RELAY PRECISION AND HIGH-PRECISION GAS DENSITY RELAY**
VERFAHREN ZUR VERBESSERUNG DER GASDICHTERELAISPRÄZISION UND HOCHPRÄZISES GASDICHTERELAIS
PROCÉDÉ D'AMÉLIORATION DE PRÉCISION DE RELAIS À DENSITÉ DE GAZ ET RELAIS À DENSITÉ DE GAZ HAUTE PRÉCISION

(30) Priority: 28.09.2018 CN 201811136649
(43) Date of publication of application: 04.11.2020
(73) Proprietor: Shanghai Roye Electrical Co., Ltd, Shanghai 201802 (CN)
(72) Inventor: JIN, Haiyong, Shanghai 201802 (CN)
(74) Representative: Berkkam, Ayfer
(86) International application number: PCT/CN2019/072685
(87) International publication number: WO 2020/062736

(56) References cited:
- WO-A1-2015/039494
- CN-A- 103 700 541
- CN-A- 105 374 624

## Description

### Technical Field

The invention relates to a gas density relay, in particular to a high-precision gas density relay and a method for improving the precision of a gas density relay.

### Background

Electric products with SF₆ and the mixed gas thereof, or other environmentally friendly gas have been widely deployed in power sectors and industrial and mining enterprises, and have greatly promoted the development of the power industry. SF₆ gas is uses as the arc extinguishing medium and the insulating medium of the SF₆ electric products, and gas leakage must not occur. Reliable and safe operation of the SF₆ electric product cannot be guaranteed in case of gas leakage. Therefore, it is necessary to monitor the SF₆ density value of an SF₆ electric product.

Currently, a mechanical pointer type SF₆ gas density relay is commonly used to monitor the density of SF₆, that is, when air leakage occurs in SF₆ electric products, the relay can give an alarm and lock up, showing the density value at the same time. A hairspring magnet-assisted electrical contact is generally utilized as the contact of the density relay, which impose a magnet-assisted suction force. However, for such a density relay with magnet-assisted electrical contact which usually utilizes a hairspring electrical contact, the force of the hairspring cannot be large, otherwise the displayed value would be inaccurate, since when the density is higher than the set value, the movable contact is movable with the pointer. In addition, the magnet-assisted suction force cannot be adjusted to be too strong; otherwise, the return value of the density relay will be so large that it will exceed the technical standard. Therefore, for the magnetic-assisted electrical contact, if the contact terminal is oxidized over time, the contact will fail or become unreliable due to the small closing force of the contact terminal. For the oil-free type, the magnet-assisted electrical contact terminal is exposed to the air, and are very susceptible to oxidization or dust accumulation, and the contact terminal thereof is prone to poor contact or contact failure. It is particularly emphasized that in coastal areas, it is more likely to lead to poor contact or contact failure of the contact terminal due to humid air and salt mist. For the oil-filled type, although magnet-assisted electrical contacts are immersed in silicone oil, the contact performance will decline after a long time and a number of times of operation. Moreover, the oil film has an insulating effect, the contact terminal is also be prone to poor contact or contact failure. Tests have shown that the contact is unreliable especially at low temperatures. In addition, the density relay has an oil leakage defect. For the density relay that leaks oil, its magnet-assisted electrical contact terminal is exposed to the air, which is very susceptible to oxidation or even dust accumulation, causing the contact terminal thereof to be prone to poor contact or contact failure.

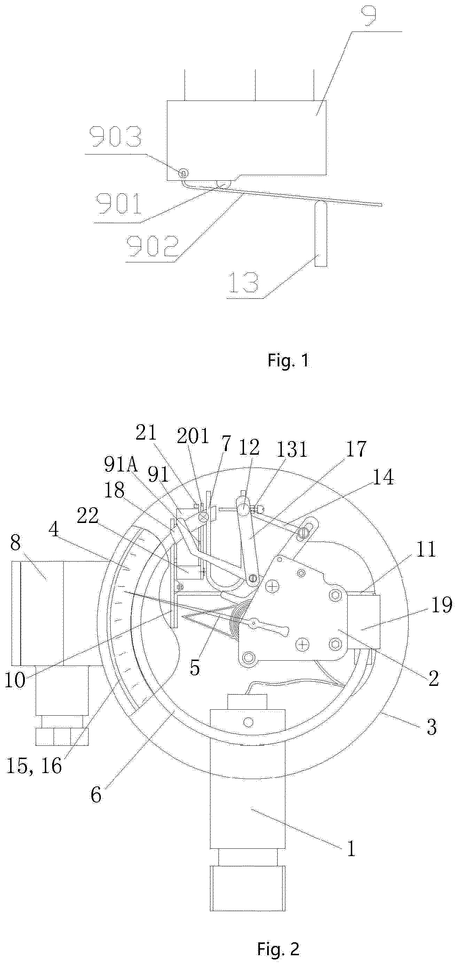

At present, an SF₆ gas density relay has been developed on the market, which uses microswitches with a swing rod (or microswitches provided with an operating arm) for its contact, the structure thereof being shown in FIG. 1. The swing rod 902 is provided with a shaft 903 and the shaft 903 is provided on the microswitch 9. In order to allow the swing rod 902 to rotate flexibly, the shaft 903 is provided on the microswitch 9 with a gap, and the swing rod 902 can also swing at the same time. Due to the displacement of the Bourdon tube being also small, as well as the gap and the swing, the precision of such density relay is not very stable. Because of the gap and the swing of the swing rod, the position of the swing rod changes, which will cause deviation and unstableness to the precision of such microswitch-type density relay. It is difficult to achieve high precision of the density relay, as shown in FIG. 1. Although the microswitch used in the above SF₆ gas density relay has certain advantages, due to the unreasonable structure of the microswitch, the following problems still exist in use: 1) Due to the gap, the slight position change will greatly affect the precision of the density relay when vibrating. 2) At the same time, it is difficult to adjust the precision accurately during debugging, that is, it is very difficult to make a high-precision density relay.

The document "WO 2015/039494 A1" discloses a high-precision gas density relay according to the preamble of claim 1.

In summary, it is necessary to develop a gas density relay with high precision and good electric performance to ensure the reliable operation of electrical equipment that uses gas such as SF₆ or mixed gases thereof to insulate or extinguish arcs.

### Summary

In order to solve the above-mentioned problems in the prior art, the object of the present invention is to provide a high-precision gas density relay with good electrical performance for controlling and monitoring the density of gas such as SF₆ in a sealed container, which can send an alarm and lockup signal timely in case of gas leakage in an electrical equipment with gas such as SF₆, thereby ensuring the safety of power.

A high-precision gas density relay, comprising: a housing, a base arranged in the housing, an end seat, a Bourdon tube, a temperature compensation element, a signal adjusting mechanism and a plurality of microswitches which are used as signal generators, one end of the Bourdon tube being connected to the base, the other end of the of the Bourdon tube being connected to the end seat, one end of the temperature compensating element being connected to the end seat, the other end of the temperature compensating element being connected to the signal adjusting mechanism;
The microswitch is a button microswitch;

The gas density relay further comprises a microswitch contact trigger element made of an elastic material, one end thereof being fixed inside the housing, the other end thereof being arranged corresponding to a button of the button microswitch and abutting the button of each microswitch in one-to-one correspondence;

When the gas density value changes, the Bourdon tube and the temperature compensation element generate displacements which successively drive the microswitch contact trigger element through the signal trigger mechanism; when the gas density value reaches a corresponding set value, the microswitch contact trigger element presses or moves away from the button of the microswitch, causing the microswitch to generate a corresponding signal, thereby completing the function of the gas density relay; when the gas density value returns to normal, the Bourdon tube and the temperature compensation element generate corresponding displacements, which successively drive the microswitch contact trigger element through the signal trigger mechanism; the microswitch contact trigger element is reset to a state when the gas density is normal.

The gas density relay further comprises a display movement, a dial and a pointer, wherein one end of the temperature compensation element is connected to the display movement through a display connecting rod or one end of the temperature compensation element is directly connected to the display movement, and the pointer is mounted on the display movement and in front of the dial.

The gas density relay further comprises a limiting piece, which limits the signal adjusting mechanism to move in a certain range, and the microswitch contact trigger element always moves within its elastic range. The signal adjusting mechanism is provided with an adjusting screw. The gas density relay further comprises a buffer balancing mechanism, which improves the vibration resistance level of the density relay.

The microswitch contact trigger element is in a straight or bending shape. The relative position of the microswitch contact trigger element and the microswitch can be horizontal or inclined.

The effective width of the portion of the front end of the microswitch contact trigger element, in contact with the signal adjusting mechanism, is 3-18 mm.

The gas density relay further comprises a limiting mechanism. When the density relay is subjected to vibration, the limiting mechanism ensures that the signal adjusting mechanism moves within a normal working range, and the limiting mechanism limits the signal adjusting mechanism to a set position at which the corresponding density value is larger than the alarm density value.

The gas density relay further comprises an auxiliary member fixed to the middle front end of the microswitch contact trigger element, so that the local rigidity of the microswitch contact trigger element made of the elastic material is improved.

The partial width of the microswitch contact trigger element made of the elastic material is reduced, or there is a notch at the part, or there is a hole at the part.

The temperature compensation element is a bimetallic strip or a gas-filled Bourdon tube.

The signal control part is provided with an anti-misoperation mechanism.

The gas density relay further comprises a pressure sensor, a temperature sensor, a signal processing unit and a signal transmission unit, wherein the signal transmission unit can send a remote signal, so that density online monitoring is realized.

A method for improving the precision of a gas density relay, wherein the gas density relay comprises: a housing, a base arranged in the housing, an end seat, a Bourdon tube, a temperature compensation element, a signal adjusting mechanism and a plurality of microswitches which are used as signal generators, one end of the Bourdon tube being connected to the base, the other end of the of the Bourdon tube being connected to the end seat, one end of the temperature compensating element being connected to the end seat, the other end of the temperature compensating element being connected to the signal adjusting mechanism; the microswitch is a button microswitch; the gas density relay further comprising a microswitch contact trigger element made of an elastic material, one end thereof being fixed inside the housing, the other end thereof being arranged corresponding to a button of the button microswitch and abutting the button of each microswitch in one-to-one correspondence;

When the gas density value changes, the Bourdon tube and the temperature compensation element generate displacements which successively drive the microswitch contact trigger element through the signal trigger mechanism; when the gas density value reaches a corresponding set value, the microswitch contact trigger element presses or moves away from the button of the microswitch, causing the microswitch to generate a corresponding signal, thereby completing the function of the gas density relay; when the gas density value returns to normal, the Bourdon tube and the temperature compensation element generate corresponding displacements, which successively drives the microswitch contact trigger element through the signal trigger mechanism; and the microswitch contact trigger element is reset to a state when the gas density is normal.

When the signal trigger mechanism generates a displacement, the microswitch contact trigger element also generate a displacement through the elastic force of the microswitch contact trigger element itself or through the thrust of the signal trigger mechanism. When a set value is reached, the microswitch is enabled to send a corresponding alarm or lockup signal. When the gas density value is normal, the microswitch contact trigger element is reset to a state when the gas density is normal.

That is, when the gas density of the electrical equipment decreases, the Bourdon tube and the temperature compensation element of the gas density relay generate displacements. The signal trigger mechanism also generates displacement. The microswitch contact trigger element also generates a displacement, and to a certain extent, causes the microswitch to generate a corresponding signal.

For utilizing the above technical solutions, the high-precision gas density relay of the present invention has the following obvious advantages and features compared with the prior art:
1. A microswitch is used as the signal generator of the density relay, thus ensuring the reliable conduction of the contacts and the reliable operation of the system.
2. Due to the microswitch contact trigger element made of elastic material, the microswitch contact trigger element enable the microswitch to send a corresponding alarm or lockup signal through the elastic force of the microswitch contact trigger element or the thrust of the signal trigger mechanism. The microswitch contact trigger element made of elastic material is fixed correspondingly to the microswitch, there is no gap, and it will not sway, so that it will not cause deterioration of precision, and it will not affect the precision of the density relay when subjected to vibration or during transportation, providing a very stable precision of the density relay. At the same time, when debugging, it is also easy to adjust the precision accurately, and it is easy to make a high-precision density relay.

### Brief Description of the Drawings

The present invention is further described with reference to the accompanying drawings, in which:
FIG. 1 is a schematic structural diagram of a microswitch of a pointer type gas density relay in the prior art;
FIG. 2 is a schematic structural diagram of a high-precision gas density relay according to the first embodiment of the present invention;
FIG. 3 is a cross-sectional view of a high-precision gas density relay according to the first embodiment of the present invention;
FIG. 4 is a schematic structural diagram of a microswitch of a high-precision gas density relay according to Example 1 of the present invention;
FIG. 5 is a cross-sectional view of a high-precision gas density relay according to Example 2 of the present invention;
FIG. 6 is a schematic structural diagram of a microswitch of a high-precision gas density relay according to the second embodiment of the present invention;
FIG. 7 is a schematic structural diagram of a microswitch of a high-precision gas density relay according to Example 3 of the present invention;
FIG. 8 is a schematic structural diagram of a microswitch of a high-precision gas density relay according to Example 4 of the present invention;
FIG. 9 is a schematic structural diagram of a microswitch of a high-precision gas density relay according to Example 5 of the present invention;
FIG. 10 is a cross-sectional view of a high-precision gas density relay according to Example 6 of the present invention;
FIG. 11 is a diagram of a microswitch contact trigger element of a high-precision gas density relay according to one embodiment of the present invention;
FIG. 12 is a diagram of a microswitch contact trigger element of a high-precision gas density relay according to another embodiment of the present invention; and
FIG. 13 is a schematic structural diagram of a microswitch of a high-precision gas density relay according to Example 7 of the present invention.

### Detailed Description of the Embodiments

To make the object, technical solutions and advantages of the embodiments of the present invention clearer, the technical solutions in the embodiments of the present invention will be described clearly and completely in conjunction with the drawings of the embodiments of the present invention. Obviously, the described embodiments are part of the embodiments of the present invention, but not all the embodiments. Based on the embodiments of the present invention, all other embodiments obtained by those skilled in the art without creative work shall fall within the scope of the present invention.

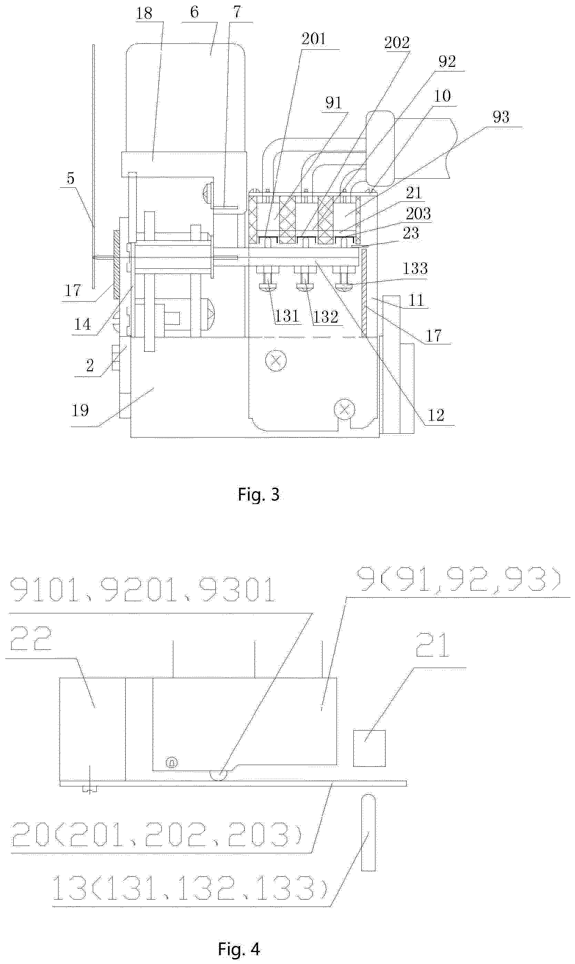

The invention provides a high-precision gas density relay as an example for description and explanation. Specifically referring to FIGS. 2, 3 and 4, FIGS. 2 and 3 are partial sectional views of the sulfur hexafluoride gas density relay according to Example 1 of the present invention. As shown in FIG. 2, FIG. 3 and FIG. 4, Example 1 discloses a high-precision gas density relay, taking SF₆ gas density relay as an example. The high precision SF₆ gas density replay of the present invention is mainly composed of a joint 1, a display movement 2, a housing 3, a dial 4, a pointer 5, a Bourdon tube 6, a temperature compensation piece (5-18mm in width), an end seat 8, several (for example, three) microswitches 91, 92, 93, a printed circuit board 10, a fixing plate 11, a signal adjustment mechanism 12, several adjusting screws 131, 132, 133, a rod 14, a cover glass 15, a cover ring 16, a limiting mechanism 17, an end seat 18, a base 19, microswitch contact trigger elements 201, 202, 203, a limiting piece 21, a microswitch contact trigger element fixture 22, an anti-misoperation mechanism 23, etc. Wherein, the joint 1 is fixed on the housing 3 and the display movement 2 is fixed on the base 19. One end of the Bourdon tube 6 is welded to and connected to the base 19, and the other end is welded to the end seat 18. The end seat 18 is connected to one end of the temperature compensation piece 7, and the other end of the temperature compensation piece 7 is connected to the signal adjustment mechanism 12. Three adjusting screws 131, 132 and 133 are fixed to the signal adjustment mechanism 12. The signal adjustment mechanism 12 is connected to the connecting rod 14, and the connecting rod 14 is connected to the display movement 2. Three microswitches 91, 92, 93 are respectively fixed on the printed circuit board 10, the printed circuit board 10 is fixed on the fixing plate 11, and the fixing plate 11 is installed on the base 19. The microswitches 91, 92 and 93 are button microswitches with buttons 9101, 9201, and 9301, respectively. The microswitch contact trigger elements 201, 202, 203 are made of high-performance elastic materials, having good elasticity, and elastic failure will not occur within a certain force range or motion range. The microswitch contact trigger elements 201, 202, 203 have a memory function and will recover after the external force disappears, which can be made of 65Mn steel, beryllium bronze, phosphor bronze, spring steel, titanium-nickel alloy and other high-performance elastic materials, or can be made of non-metallic plastic materials with memory function, which can also be made of metal materials with memory function. In addition to titanium-nickel alloys, they can also be made of high-performance elastic materials such as gold-cadmium alloys and copper-zinc alloys. The microswitch contact trigger elements 201, 202 and 203 are fixed in the housing by the microswitch contact trigger element fixture 22. The microswitch contact trigger elements 201, 202 and 203 are provided corresponding to the microswitches 91, 92 and 93, respectively. That is, the microswitch contact trigger elements 201, 202 and 203 are respectively provided corresponding to the buttons 9101, 9201, and 9301 of the microswitch 91, 92 and 93, and the microswitch contact trigger elements 201, 202 and 203 are correspondingly provided above the adjusting screws 131, 132, 133. As shown in Figure 4, the microswitch contact trigger element 201 is fixed above the adjusting screw 131, the microswitch contact trigger element 202 is fixed above the adjusting screw 132, and the microswitch contact trigger element 203 is fixed above the adjusting screw 133. The limiting piece 21 is fixed in the housing, and the limiting piece 21 is provided corresponding to the microswitch contact trigger elements 201, 202 and 203. The pointer 5 and the dial 4 are fixed on the display movement 2 respectively. The signal contacts of the microswitch are connected from the printed circuit board 10 to the end seat 8 through wires, and the end seat 8 is fixed on the housing 3. The cover glass 15 and the cover ring 16 are respectively fixed on the housing 3, and can protect the internal structure from mechanical damage and the intrusion of dirt and rain. The limiting mechanism 17 is fixed in the housing. There is a gap between the limiting mechanism 17 and the signal adjustment mechanism 12. The function of the limiting mechanism 17 is to prevent the signal adjustment mechanism 12 from generating excessive displacement along its axis when the switch vibrates, and to prevent the adjusting screws 131, 132 and 133 from getting stuck or detached from the microswitch contact trigger element 201, 202 and 203, thereby ensuring that the system works reliably. In this example, the microswitch contact trigger element 201, 202, 203 are in a straight shape; the microswitch contact trigger elements 201, 202, 203 and the microswitchs 91, 92, 93 are relatively horizontal to each other; and the temperature compensation element 7 is made of a bimetallic material, or a gas-filled compensation Bourdon tube.

In addition, the relay is also provided with an anti-misoperation mechanism 23, which can limit the amplitude of the Bourdon tube 6 and the signal adjustment mechanism 12 when the density relay is subjected to vibration, thus greatly improving the anti-vibration performance of the relay and ensuring that the system works reliably.

The working principle of the high-precision gas density relay of the present invention is based on the elastic element Bourdon tube 6, using the temperature compensation piece 7 to correct the changed pressure and temperature to reflect the change in gas density. That is, under the pressure of the measured medium (e.g. SF₆) gas, the change in density value cause the pressure value to change accordingly due to the effect of the temperature compensation piece 7. The end of the Bourdon tube 6 is forced to produce a corresponding elastic deformation displacement. With the help of the temperature compensation piece 7 and the connecting rod 14, the displacement is transferred to the display movement 2, and is then transferred from the display movement 2 to the pointer 5, and therefore the measured gas density value is indicated on the dial 4. If the gas leaks, the density value drops to a certain level (reaches the alarm or lockup value), the Bourdon tube 6 generates a corresponding downward displacement, causing the signal adjustment mechanism 12 to move downward through the temperature compensation piece 7. The adjusting screws 131, 132, 133 on the signal adjustment mechanism 12 gradually move away from the corresponding microswitch contact trigger elements 201, 202, 203, and the microswitch contact trigger elements 201, 202, 203 gradually move away from the corresponding buttons 9101, 9201, 9301 of the microswitch 91, 92, 93. When reaching a certain extent, the corresponding microswitches 91, 92, 93 contacts are connected, generating corresponding signals (alarm or lockup) to achieve monitoring and controlling the gas density in the electrical switches and other equipment, thereby allowing the electrical equipment to work safely. If the density value increases, the pressure value increases accordingly. When the value reaches a certain level, the Bourdon tube 6 generates a corresponding upward displacement, causing the signal adjustment mechanism 12 to move upward through the temperature compensation piece 7. The adjusting screws 131, 132 and 133 on the signal adjustment mechanism 12 move upward, thus pushing the corresponding microswitch contact trigger elements 201, 202 and 203 to move upward. The contacts of the microswitches 91, 92 and 93 are disconnected, and the signal thereof (alarm or lockup) is romoved. In this example, the temperature compensation element 7 may be made of two independent bimetallic materials, that is, the contact control part has a bimetallic material temperature compensation element, and the display part has another temperature compensation element made of bimetallic material. As such, the temperature compensation performance and the precision of the density relay can be further improved. In addition, when the gas density value changes, the Bourdon tube 6 and the temperature compensation element 7 will generate displacements, which successively can drive the microswitch contact trigger elements 201, 202, 203 through the signal trigger mechanism 12. When the gas density value changes to the corresponding set value (such as an alarm value, or a lockup value), the microswitch contact trigger elements 201, 202, 203 are deformed accordingly and move away from the button of the microswitch, causing the microswitches 91, 92, 93 to generate corresponding signals, thereby completing the function of the gas density relay. When the gas density value returns to normal, the Bourdon tube 6 and the temperature compensation element 7 will also generate corresponding displacements, which successively drive the microswitch contact trigger elements 201, 202 and 203 through the signal trigger mechanism 12. The deformation of microswitch contact trigger elements is reset to the initial state, or returns to the corresponding state when the gas density is normal. In short, when the gas density of the electrical equipment decreases, the Bourdon tube 6 and the temperature compensation element 7 of the gas density relay generate displacements, and the signal trigger mechanism 12 also generates a displacement. At this time, the microswitch contact trigger elements (201, 202, 203) also generate displacements, and when it gets to a certain level, the microswitches (91, 92, 93) generate corresponding signals. In short, when the gas density value changes, the Bourdon tube 6 and the temperature compensation element 7 generate displacements, which successively can drive the microswitch contact trigger elements 201, 202, 203 through the signal trigger mechanism 12; when the gas density value changes to a corresponding set value, the microswitch contact trigger elements 201, 202, 203 move away from the button of the microswitch, causing the microswitch to generate a corresponding signal, thereby completing the function of the gas density relay. After the gas density value returns to normal, the Bourdon tube and the temperature compensation element generate corresponding displacements, which successively drive the microswitch contact trigger element through the signal trigger mechanism, and the microswitch contact trigger element is reset to the state when the gas density is normal. That is, when the gas density is normal, the microswitch contact trigger element presses the button of the microswitch, while when the gas density decreases, the microswitch contact trigger element moves away from the button of the microswitch. The microswitch has contacts that are often connected and often disconnected.

The number of the microswitches and adjusting screws are not limited to three, but can also be one, two, four or more.

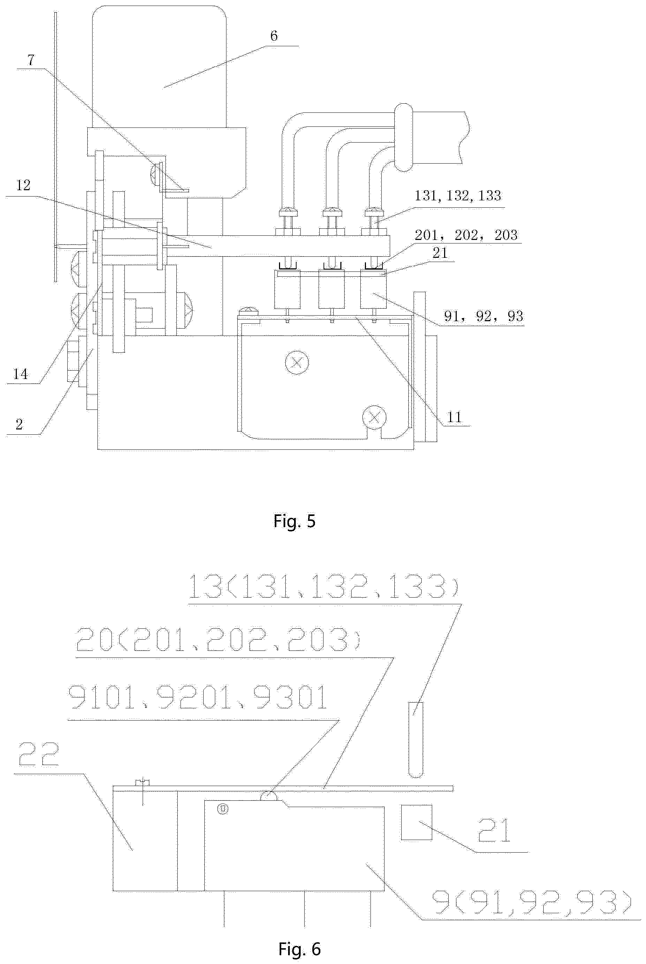

FIG. 5 is a partial sectional view of a sulfur hexafluoride gas density relay according to Embodiment 2 of the present invention. As shown in FIGS. 5 and 6, the microswitch contact trigger elements 201, 202 and 203 are correspondingly disposed below the adjusting screws 131 and 132, 133, that is, the micro switch contact trigger element 201 is fixed below the adjusting screw 131, the micro switch contact trigger element 202 is fixed below the adjusting screw 132, and the micro switch contact trigger element 203 is fixed below the adjusting screw 133. The limiting piece 21 is fixed in the housing, and the limiting piece 21 is provided corresponding to the microswitch contact trigger elements 201, 202 and 203. If the electrical equipment has gas leaks, the density value drops to a certain level (reaches the alarm or lockup value), the Bourdon tube 6 generates a corresponding downward displacement, which, through the temperature compensation piece 7, causes the signal adjustment mechanism 12 to move downward. The adjusting screws 131, 132, 133 on the signal adjustment mechanism 12 move close to the corresponding microswitch contact trigger elements 201, 202, 203, and the microswitch contact trigger elements 201, 202, 203 move close to the corresponding buttons 9101, 9201, 9301 of the microswitch 91, 92, 93. When the above movement gets to a certain level, the corresponding microswitches 91, 92, 93 contacts are connected, generating corresponding signals (alarm or lockup) to achieve monitoring and controlling the gas density in the electrical switches and other equipments, allowing the electrical equipment to work safely. If the density value increases, the pressure value increases accordingly. When the increase reaches a certain level, the Bourdon tube 6 will generates a corresponding upward displacement, which, through the temperature compensation piece 7, causes the signal adjustment mechanism 12 to move upward, and the adjusting screws 131, 132 and 133 on the signal adjustment mechanism 12 also move upward. The corresponding microswitch contact trigger elements 201, 202 and 203 move upward under the action of their own elastic force and the elastic force of the micro-switch button, so that the contacts of the microswitches 91, 92 and 93 are disconnected, and the signal thereof (alarm or lockup) is removed. Similarly, the limiting piece 21 restricts the adjusting screws 131, 132 and 133 of the signal adjustment mechanism 12 to move within a certain range, and protects the microswitch contact trigger elements 201, 202 and 203 to move within their elastic range all the time. The microswitch contact trigger elements 201, 202 and 203 will not have elastic failure problem within this certain force range, ensuring the realization of high precision and the long-term stability of contact precision. The effective width of the portion of the front end of the microswitch contact trigger element 201, 202, 203 in contact with the adjusting screw 131, 132, 133 of the signal adjustment mechanism 12 is 4.0-18mm, which improves vibration resistance. In this example, when the gas density value changes, the Bourdon tube 6 and the temperature compensation element 7 generate displacements, which successively can drive the microswitch contact trigger elements 201, 202, 203 through the signal trigger mechanism 12; when the gas density value changes to a corresponding set value, the microswitch contact trigger elements 201, 202, 203 press the buttons of the microswitches, causing the microswitches to generate a corresponding signal, thereby completing the function of the gas density relay. That is, when the gas density is normal, the microswitch contact trigger element moves away from the button of the microswitch, and when the gas density decreases, the microswitch contact trigger element presses the button of the microswitch. The microswitch has contacts that are often connected and often disconnected.

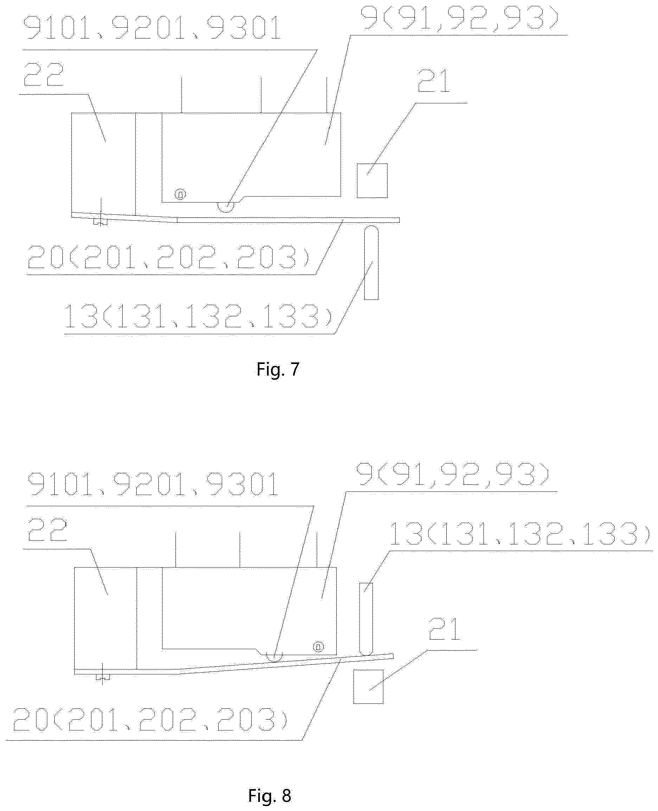

FIG. 7 is a structural diagram showing a microswitch of a high-precision gas density relay according to Embodiment 3 of the present invention. As shown in FIG. 7, the microswitch contact trigger elements 201, 202 and 203 are in a bending shape, and the relative positions of the microswitch contact trigger elements 201, 202, 203 and the microswitches 91, 92, 93 are inclined. In this example, when the gas density value changes, the Bourdon tube 6 and the temperature compensation element 7 generate displacements, which successively can drive the microswitch contact trigger elements 201, 202, 203 through the signal trigger mechanism 12; when the gas density value changes to a corresponding set value, the microswitch contact trigger element 201, 202, 203 move far away from the buttons of the microswitches, without pressing the buttons of the microswitches, enabling the microswitches to generate corresponding signals, thereby completing the function of the gas density relay. That is, when the gas density is normal, the microswitch contact trigger element presses the button of the microswitch, and when the gas density decreases, the microswitch contact trigger element moves away from the button of the microswitch.

FIG. 8 is a structural diagram of a microswitch of a high-precision gas density relay according to Embodiment 4 of the present invention. As shown in FIG. 8, when the gas density of electrical equipment is normal, the microswitch contact trigger elements 201, 202, 203 press the buttons 9101, 9201, and 9301 of the microswitches 91, 92 and 93. When the gas leaks, the microswitch contact trigger elements 201, 202 and 203 generate displacements through the pushing forces from the adjusting screws 131, 132 and 133 of the signal trigger mechanism 12, respectively, and move away from the buttons 9101, 9201, 9301 of the microswitches 91, 92 and 93, respectively. When the set value is reached, the microswitch issues a corresponding alarm or lockup signal.

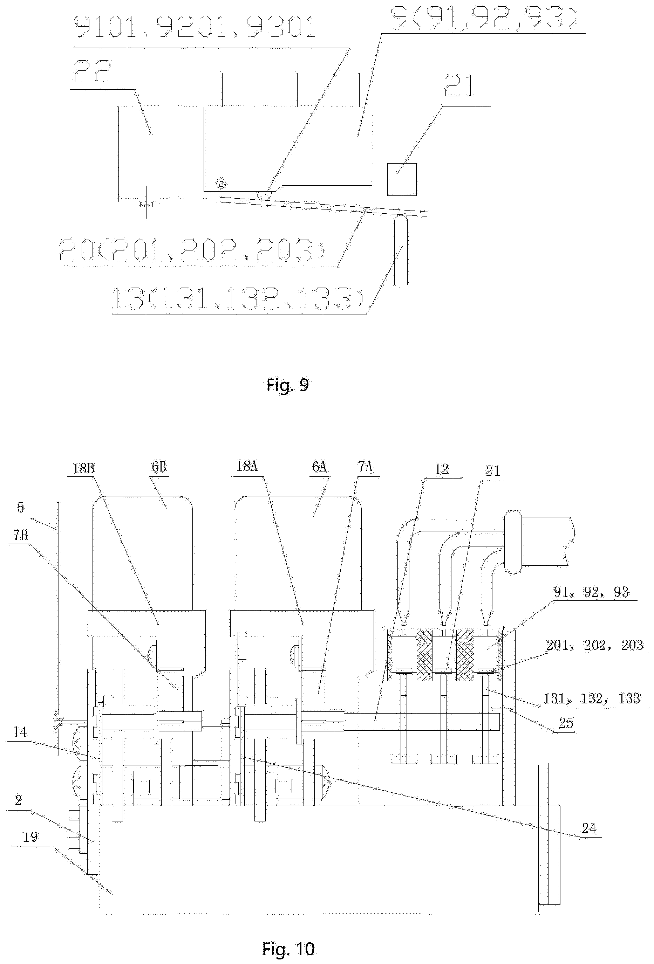

FIG. 9 is a structural diagram of a microswitch of a high-precision gas density relay according to Embodiment 5 of the present invention. As shown in FIG. 9, when the gas density of electrical equipment is normal, the pushing force of the adjusting screws 131, 132 and 133 of the signal trigger mechanism 12 cause the microswitch contact trigger elements 201, 202 and 203 to press the buttons 9101, 9201, and 9301 of the microswitches 91, 92 and 93. When the gas leaks, the signal trigger mechanism and adjusting screws thereof are displaced, and move away from the microswitch contact trigger elements. The microswitch contact trigger elements move away from the buttons 9101, 9201, 9301 of the microswitches 91, 92, 93 through their own elastic force and the elastic force of the micro switch buttons. When the set value is reached, the microswitch issues a corresponding alarm or lockup signal. When the gas leaks, the signal trigger mechanism and adjusting screws thereof are displaced, and move away from the microswitch contact trigger elements. The microswitch contact trigger element move away from the buttons 9101, 9201, 9301 of the microswitches 91, 92, 93 through their own elastic force. When the set value is reached, the microswitch issues a corresponding alarm or lockup signal. When gas leaks, the signal trigger mechanism and adjusting screws thereof are displaced, and move away from the microswitch contact trigger element. The microswitch contact trigger elements move away from the buttons 9101, 9201, 9301 of the microswitches 91, 92, 93 through their own elastic force. When the set value is reached, the microswitch issues a corresponding alarm or lockup signal.

FIG. 10 is a cross-sectional view of a high-precision gas density relay according to Embodiment 6 of the present invention. As shown in FIG. 10, a high-precision gas density relay includes a relatively independent signal control part and an indication value display part; the signal control part includes a control base 19, a control end seat 18A, a control Bourdon tube 6A, a control temperature compensation element 7A, signal adjustment mechanism 12 and several microswitches 91, 92, 93 used as signal generators. One end of the control Bourdon tube 6A is connected to the control base 19, the other end of the control Bourdon tube 6A is connected to one end of the control temperature compensation element 7A, and the other end of the control temperature compensation element 7A is connected to the signal adjustment mechanism 12. The microswitches 91, 92 and 93 are button microswitches. The gas density relay further includes microswitch contact trigger elements 201, 202 and 203 made of an elastic material. One end of the microswitch contact trigger elements 201, 202, 203 is fixed in the housing, and the other end is provided corresponding to the buttons of the button microswitches 91, 92 and 93, and abuts on the buttons of each microswitch in one-to-one correspondence. When the gas density value changes, the control Bourdon tube 6A and the control temperature compensation element 7A generate displacements, and the displacements successively drive the microswitch contact trigger elements 201, 202 and 203 through the adjusting screws 131, 132 and 133 of the signal trigger mechanism 12, respectively. The positions of the microswitch contact trigger elements 201, 202 and 203 change, which causes the microswitch 91, 92, 93 to generate corresponding signal to complete the function of the gas density relay. The high-precision gas density relay includes a buffer balance mechanism 24, and the buffer balance mechanism 24 which supports the signal trigger mechanism 12, further improving the vibration resistance level of the density relay. In addition, the high-precision gas density relay is adjustably installed with a limiting mechanism 25. The limiting mechanism 25 has elasticity and limits the signal adjustment mechanism 12 to a set position at which the corresponding value is greater than the alarm density value, thereby further improving the anti-vibration performance of density relay.

At the same time, the high-precision density relay of this example also includes a relatively independent indication display part. As shown in FIG. 10, the indication display part includes a display Bourdon tube 6B, a display temperature compensation element 7B, a display base 19, a display end seat 18B, a display movement 2, a dial and a pointer 5. One end of the display Bourdon tube 6B is connected to the display base 19, and the other end is connected to one end of the display temperature compensation element 7B through the display end seat 18B. The other end of the display temperature compensation element 7B is connected to the display movement 2 through the display connecting rod 14, or the other end of the temperature compensation element 7B is directly connected to the display movement 2. The pointer 5 is installed on the display movement 2 and is provided in front of the dial to indicate the gas density value. the control base and the display base are integrated in this example, but they can be separated in other cases.

In addition, the high-precision gas density relay of the present invention may further include a pressure sensor, a temperature sensor, a signal processing unit, and a signal transmission unit which can send a remote signal to realize online density monitoring.

A method for improving the precision of a gas density relay is provided in the present invention. As shown in FIGS. 2, 3 and 4, the density relay includes: a housing 3, a base 19 provided in the housing 3, an end seat 18, a Bourdon tube 6, a temperature compensation element 7, a signal adjustment mechanism 12 and several microswitches 91, 92, 93 used as signal generators. One end of the Bourdon tube 6 is connected to the base 19, the other end thereof is connected to the end seat 18. One end of the temperature compensation element 7 is connected to the end seat 18, the other end of the temperature compensation element 7 is connected to the signal adjustment mechanism 12. The microswitches 91, 92, 93 are button microswitches. The gas density relay also includes microswitch contact trigger elements 201, 202, 203 made of elastic material, one end thereof is fixed in the housing by a fixture 22, and the other end is provided corresponding to the buttons 9101, 9201, 9301 of the button microswitches, abutting the buttons 9101, 9201, 9301 of each microswitch in one to one correspondence. When the gas density value changes, the Bourdon tube 6 and the temperature compensation element 7 generate displacements, which are passed to the adjusting screws 131, 132 and 133 of the signal trigger mechanism 12. The adjusting screws 131, 132 and 133 drive the microswitch contact trigger elements 201, 202 and 203, respectively. The positions of the microswitch contact trigger elements 201, 202 and 203 change respectively, so that the microswitches 91, 92 and 93 generate corresponding signals to complete the function of the gas density relay. That is, when the gas density of the electrical equipment decreases, the Bourdon tube 6 of the gas density relay and the temperature compensation element 7 move, and the signal trigger mechanism 12 also moves. At this time, the microswitch contact trigger elements 201, 202, 203 move accordingly. When the displacement reaches a certain level, the microswitches 91, 92 and 93 generate corresponding signals. In short, when the signal trigger mechanism 12 is displaced, the microswitch contact trigger elements 201, 202, 203 generate displacements accordingly through their own elastic force or through the thrusts by the adjusting screws 131, 132, 133 of the signal trigger mechanism 12. When the set value is reached, the microswitch issues a corresponding alarm or lockup signal.

The innovation points and core techniques of the present invention are as follows: the microswitch contact trigger elements are made of elastic material and they enable the microswitch to issue a corresponding alarm or lockup signal through the elastic force of the microswitch contact trigger elements themselves or the thrust by the signal trigger mechanisms. And the microswitch contact trigger elements made of elastic material are fixed correspondingly to the microswitch with no gaps therebetween, so that they will not sway, and thus will not cause deterioration of precision. The precision of the density relay will not be affected during vibration or transportation, making the precision of the density relay very stable. At the same time, when debugging, it is also easy to adjust the precision accurately, and it is easy to make a high-precision density relay. At the same time, the microswitch is used as the signal generator of the density relay, thus the reliable conduction of the contacts is ensured, enabling the reliable operation of the system and the safe operation of the power network. It can be suitably applied to electrical equipment which uses gas such as SF₆. After comparative testing, it can be seen from Table 1 that the density relay of the present invention has better contact precision, stability and performance over the density relay in the prior art. The present invention has outstanding substantive features and significant progress, and can improve the precision and stability of the microswitch density relay greatly, thus ensuring the reliable and safe operation of the power network.

As can be seen from Table 1, the density relay of the present invention has good contact precision and stability, which meets the requirements of high precision and improves the environmental adaptability of the density relay. At the same time, the key point is that it has excellent stability, and the precision will not change with vibration.

**Table 1: Performance comparison between density relay of the present invention and density relay of the prior art**

| Test object | Tests | Alarm contact: 0.62 (MPa) | Lockup 1 contact: 0.6 (MPa) | Lockup 2 contact: 0.6 (MPa) | Max. error (MPa) | Max. fluctuating value (Max. - Min.) (MPa) |
|---|---|---|---|---|---|---|
| Density relay of the present | 1 | 0.621 | 0.597 | 0.596 | -0.004 | 0.003 |
| | 2 | 0.622 | 0.596 | 0.595 | -0.005 | |
| invention | 3 | 0.621 | 0.596 | 0.597 | -0.003 | |
| | 4 | 0.623 | 0.598 | 0.598 | 0.003 | |
| | 5 | 0.620 | 0.597 | 0.596 | -0.004 | |
| | 6 | 0.621 | 0.598 | 0.597 | -0.003 | |
| Density relay of the prior art | 1 | 0.623 | 0.598 | 0.595 | -0.005 | 0.014 |
| | 2 | 0.614 | 0.594 | 0.589 | -0.011 | |
| | 3 | 0.625 | 0.592 | 0.602 | -0.008 | |
| | 4 | 0.617 | 0.603 | 0.593 | -0.007 | |
| | 5 | 0.620 | 0.591 | 0.590 | -0.010 | |
| | 6 | 0.626 | 0.594 | 0.588 | -0.012 | |

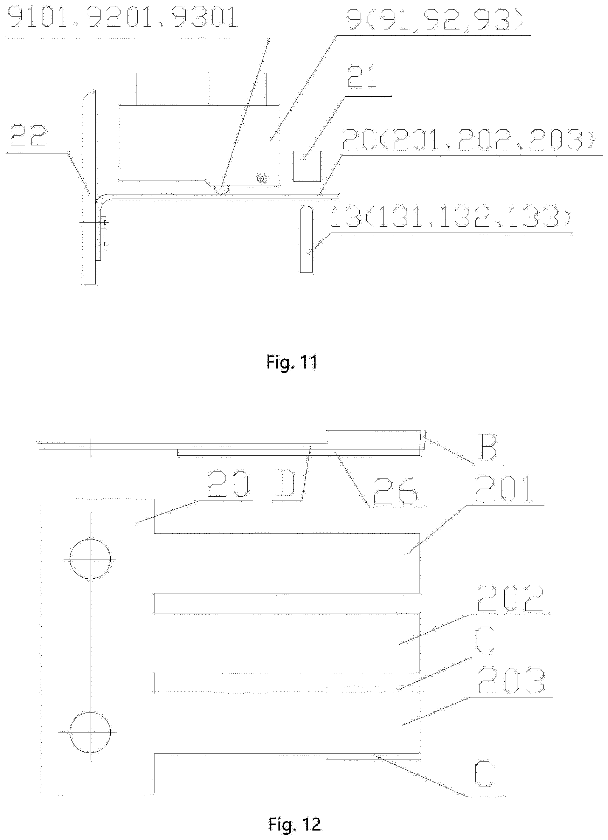

As shown in FIG. 11, the microswitch contact trigger elements can be designed in an integrated manner, forming a microswitch contact trigger unit, or they can be designed to be separated from each other. In addition, as shown in FIG. 11, the height of the baffle plates on both sides of the front end of the microswitch contact trigger element 203 is 2.6-18 mm, and the front end of the microswitch contact trigger element 203 can also be provided with an end plate B. The end plate B, together with the baffle plates C on both sides, forms a semi-closed area that can restrict the adjusting screw from being separated from the microswitch contact trigger element 203, at the front end of the microswitch contact trigger element 203. As such, the high-precision gas density relay of the present invention can avoid the displacements of the microswitch contact trigger element and the adjusting screw when the vibration occurs in the switch, so that the adjusting screw will not get stuck or separated from the microswitch contact trigger element, ensuring that the system works reliably. The anti-vibration performance is greatly improved. At the same time, the part of the front end of each microswitch contact trigger element contacting the adjusting screw can be arranged as a rectangular flat plate, the width of which is 4.4-8mm, avoiding displacements of the microswitch contact trigger element and the adjusting screw, so that the adjusting screws will not get stuck or separated from the microswitch contact trigger element, ensuring the reliable operation of the system and further improving the anti-vibration performance of the product. As shown in FIG. 11, an auxiliary member 26 is also included, which is fixed at the middle and front end of microswitch contact trigger element to improve the local rigidity of the microswitch contact trigger element made of elastic material. Since the auxiliary member 26 is fixed at the middle and front end of the microswitch contact trigger element, it ensures the support points for the microswitch contact trigger element when displacement (or deformation such as bending) occurs due to the elastic material thereof. Thus, it is ensured that the difference value before and after contact is within an appropriate range, and that the switching of the density relay meets the relevant standards.

As shown in FIG. 12, the width of the part E of the microswitch contact trigger element made of an elastic material is reduced. In other words, the width at the part E is smaller than the width at the front end. Or there is a notch or a hole at this part, such as at F. In this way, it is equivalent to increasing the rigidity of the front end of the microswitch contact trigger element made of elastic material, which can ensure that the difference value before and after contact is within an appropriate range, and ensures that the switching of the density relay meets related standards. In short, the microswitch contact trigger element made of elastic material can be in diverse shape, and its fixing way also varies. In addition, the microswitch contact trigger elements can be designed to be integrated into a microswitch contact trigger unit, as shown in Figure 12; they can also be designed to be separated from each other; or partly integrated, partly separated.

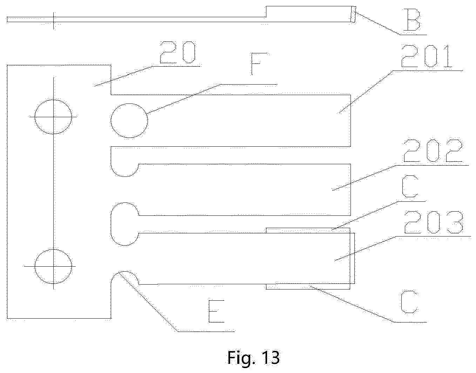

As shown in FIGS. 4, 7 and 13, the microswitch contact trigger elements may be in a straight or bending shape, that is, it may be straight or be bent at different angles.

In addition, the outside of the housing of the density relay can be provided with a heat insulation layer to reduce the influence of temperature difference.

In addition, the following measures may be taken to improve the anti-vibration performance. A tray provided at the rear of the housing may be used. Between the tray and the housing, a vibration isolation pad (such as a spring vibration isolation pad) may be provided. The movement may also have a damping mechanism; or the display part of the movement is arranged to be an anti-vibration movement (particularly, an anti-vibration movement includes torsion springs). The density relay housing can be filled with anti-vibration oil, etc.

And, the microswitch and the base are located on both sides of the signal adjustment mechanism, respectively. That is, the microswitch is located above the corresponding signal adjustment mechanism, respectively. Or the microswitch and the base are located on one side of the signal adjustment mechanism, respectively. That is, the microswitch is located below the corresponding signal adjustment mechanism.

The high-precision density relay of the present invention may further include a holding mechanism which operates after issuing a signal, and may further include a holding mechanism and a reset mechanism which operate after issuing a signal.

## Claims

1. A high-precision gas density relay, comprising:
a housing (3), a base (19) arranged in the housing (3), an end seat (18), a Bourdon tube (6), a temperature compensation element (7), a signal adjusting mechanism (12) and a plurality of microswitches (91, 92, 93),
wherein the plurality of microswitches (91, 92, 93) are used as signal generators, a first end of the Bourdon tube (6) being connected to the base (19), a second end of the Bourdon tube (6) being connected to the end seat (18), a first end of the temperature compensating element (7) being connected to the end seat (18), a second end of the temperature compensating element (7) being connected to the signal adjusting mechanism (12); **characterized in that**,
a microswitch of the plurality of microswitches (91, 92, 93) is a button micro switch;
the high-precision gas density relay further comprises a microswitch contact trigger element (201, 202, 203) made of an elastic material, a first end of the microswitch contact trigger element (201, 202, 203) being fixed inside the housing (3), a second end of the microswitch contact trigger element (201, 202, 203) being arranged corresponding to a button (9101, 9201, 9301) of the button microswitch and abutting the button (9101, 9201, 9301) of each microswitch of the plurality of microswitches (91, 92, 93) in one-to-one correspondence;
when a gas density value changes, the Bourdon tube (6) and the temperature compensation element (7) generate a plurality of displacements, wherein the plurality of displacements drive the microswitch contact trigger element (201, 202, 203) through a signal trigger mechanism; when the gas density value reaches a corresponding set value, the microswitch contact trigger element (201, 202, 203) presses or moves away from the button (9101, 9201, 9301) of the microswitch of the plurality of micro switches, causing the microswitch of the plurality of microswitches (91, 92, 93) to generate a corresponding signal, by causing the microswitch of the plurality of microswitches (91, 92, 93) to generate the corresponding signal, the microswitch contact trigger element (201, 202, 203) completes a function of the gas density relay; and
when the gas density value returns to normal, the Bourdon tube (6) and the temperature compensation element (7) generate a plurality of corresponding displacements, wherein the plurality of corresponding displacements drive the microswitch contact trigger element (201, 202, 203) through the signal trigger mechanism; the microswitch contact trigger element (201, 202, 203) is reset to a state when the gas density is normal.

2. The high-precision gas density relay according to claim 1, further comprising a display movement, a dial and a pointer, wherein a first end of the temperature compensation element (7) is connected to the display movement through a display connecting rod or the first end of the temperature compensation element (7) is directly connected to the display movement, and the pointer is mounted on the display movement and in front of the dial.

3. The high-precision gas density relay according to claim 1, further comprising a limiting piece, wherein the limiting piece limits the signal adjusting mechanism (12) to move in a certain range, and a movement of the microswitch contact trigger element (201, 202, 203) is within an elastic range of the microswitch contact trigger element (201, 202, 203).

4. The high-precision gas density relay according to claim 1, wherein the signal adjusting mechanism (12) is provided with an adjusting screw.

5. The high-precision gas density relay according to claim 1, further comprising a buffer balance mechanism, wherein the buffer balance mechanism improves a vibration resistance level of the high-precision gas density relay.

6. The high-precision gas density relay according to claim 1, wherein the microswitch contact trigger element (201, 202, 203) is in a straight or a bending shape.

7. The high-precision gas density relay according to claim 1, wherein a relative position of the microswitch contact trigger element (201, 202, 203) and the microswitch of the plurality of microswitches (91, 92, 93) is horizontal or inclined.

8. The high-precision gas density relay according to claim 1, wherein an effective width of a portion of a front end of the microswitch contact trigger element (201, 202, 203) in contact with the signal adjusting mechanism (12) is 3-18 mm.

9. The high-precision gas density relay according to claim 1, further comprising a limiting mechanism; when the high-precision gas density relay is subjected to a vibration, the limiting mechanism ensures the signal adjusting mechanism (12) to move within a normal working range, and the limiting mechanism limits the signal adjusting mechanism (12) to a set position, wherein at the set position a corresponding density value is larger than an alarm density value.

10. The high-precision gas density relay according to claim 1, further comprising an auxiliary member fixed to a middle and a front end of the microswitch contact trigger element (201, 202, 203), wherein the auxiliary member improves a local rigidity of the microswitch contact trigger element (201, 202, 203) made of an elastic material.

11. The high-precision gas density relay according to claim 1, wherein a partial width of the microswitch contact trigger element (201, 202, 203) made of an elastic material is reduced, or the partial width of the microswitch contact trigger element (201, 202, 203) is in a form of a notch, or the partial width of the microswitch contact trigger element (201, 202, 203) is in a form of a hole.

12. The high-precision gas density relay according to claim 1, wherein the temperature compensation element (7) is a bimetallic strip or a gas-filled Bourdon tube.

13. The high-precision gas density relay according to claim 1, wherein the independent signal control part is provided with an anti-misoperation mechanism.

14. The high-precision gas density relay according to claim 1, wherein the high-precision gas density relay further comprises a pressure sensor, a temperature sensor, a signal processing unit and a signal transmission unit, wherein the signal transmission unit sends a remote signal to realize a density online monitoring.

15. A method for improving a precision of the gas density relay, wherein the gas density relay comprises:
a housing (3), a base (19) arranged in the housing (3), an end seat (18), a Bourdon tube (6), a temperature compensation element (7), a signal adjusting mechanism (12) and a plurality of microswitches (91, 92, 93),
wherein the plurality of microswitches (91, 92, 93) are used as signal generators, a first end of the Bourdon tube (6) being connected to the base (19), a second end of the Bourdon tube (6) being connected to the end seat (18), a first end of the temperature compensating element being connected to the end seat (18), a second end of the temperature compensating element being connected to the signal adjusting mechanism (12);
**characterized in that**,
the microswitch of the plurality of microswitches (91, 92, 93) being a button microswitch;
the gas density relay further comprising a microswitch contact trigger element (201, 202, 203 made of an elastic material a first end of the microswitch contact trigger element (201, 202, 203) being fixed inside the housing (3), a second end of the microswitch contact trigger element (201, 202, 203) being arranged corresponding to a button (9101, 9201, 9301) of the button microswitch and abutting the button (9101, 9201, 9301) of each microswitch of the plurality of microswitches (91, 92, 93) in one-to-one correspondence;
when the gas density value changes, the Bourdon tube (6) and the temperature compensation element (7) generate a plurality of displacements, wherein the plurality of displacements drive the microswitch contact trigger element (201, 202, 203) through the signal trigger mechanism; when the gas density value reaches a corresponding set value, the microswitch contact trigger element (201, 202, 203) presses or moves away from the button (9101, 9201, 9301) of the microswitch of the plurality of microswitches (91, 92, 93), causing the microswitch of the plurality of microswitches (91, 92, 93) to generate a corresponding signal, by causing the microswitch of the plurality of microswitches (91, 92, 93) to generate the corresponding signal, the microswitch contact trigger element (201, 202, 203) completes function of the gas density relay;
when the gas density value returns to normal, the Bourdon tube (6) and the temperature compensation element (7) generate a plurality of corresponding displacements, wherein the corresponding displacements drive the microswitch contact trigger element (201, 202, 203) through the signal trigger mechanism, and the microswitch contact trigger element (201, 202, 203) is reset to a state when the gas density is normal.

16. The method for improving precision of the gas density relay according to claim 15, wherein,
when the signal trigger mechanism generates a displacement, the microswitch contact trigger element (201, 202, 203) generate a displacement accordingly through an elastic force of the microswitch contact trigger element (201, 202, 203) or through a thrust of the signal trigger mechanism; when a set value is reached, the microswitch of the plurality of microswitches (91, 92, 93) issues a corresponding alarm or a lockup signal; and when the gas density value is normal, the microswitch contact trigger element (201, 202, 203) is reset to a state when the gas density is normal.

## Patentansprüche

1. Ein hochpräzises Gasdichterelais, umfassend:
ein Gehäuse (3), eine im Gehäuse (3) angeordnete Basis (19), einen Endsitz (18), ein Bourdonrohr (6), ein Temperaturkompensationselement (7), einen Signaleinstellmechanismus (12) und eine Vielzahl von Mikroschaltern (91, 92, 93),
wobei die Vielzahl von Mikroschaltern (91, 92, 93) als Signalgeneratoren verwendet werden, ein erstes Ende des Bourdonrohrs (6) mit der Basis (19) verbunden ist, ein zweites Ende des Bourdonrohrs (6) mit dem Endsitz (18) verbunden ist, ein erstes Ende des Temperaturkompensationselements (7) mit dem Endsitz (18) verbunden ist, ein zweites Ende des Temperaturkompensationselements (7) mit dem Signaleinstellmechanismus (12) verbunden ist, **dadurch gekennzeichnet, dass**
ein Mikroschalter der Vielzahl von Mikroschaltern (91, 92, 93) ein Tastenmikroschalter ist;
das hochpräzise Gasdichterelais ferner ein Mikroschalter-Kontaktauslöseelement (201, 202, 203) aus einem elastischen Material umfasst, ein erstes Ende des Mikroschalter-Kontaktauslöseelements (201, 202, 203) im Inneren des Gehäuses (3) befestigt ist, ein zweites Ende des Mikroschalter-Kontaktauslöseelementes (201, 202, 203) entsprechend einer Taste (9101, 9201, 9301) des Tastenmikroschalters angeordnet ist und an der Taste (9101, 9201, 9301) jedes Mikroschalters der Vielzahl von Mikroschaltern (91, 92, 93) in Eins-zu-Eins-Entsprechung anliegt;
wenn sich ein Gasdichtewert ändert, das Bourdonrohr (6) und das Temperaturkompensationselement (7) eine Vielzahl von Verschiebungen erzeugen, wobei die Vielzahl von Verschiebungen das Mikroschalter-Kontaktauslöseelement (201, 202, 203) durch einen Signalauslösemechanismus antreibt; wenn der Gasdichtewert einen entsprechenden Sollwert erreicht, das Mikroschalter-Kontaktauslöseelement (201, 202, 203) die Taste (9101, 9201, 9301) des Mikroschalters der Vielzahl von Mikroschaltern drückt oder sich von ihm wegbewegt, wodurch der Mikroschalter der Vielzahl von Mikroschaltern (91, 92, 93) veranlasst wird, ein entsprechendes Signal zu erzeugen, indem der Mikroschalter der Vielzahl von Mikroschaltern (91, 92, 93) veranlasst wird, das entsprechende Signal zu erzeugen, das Mikroschalter-Kontaktauslöseelement (201, 202, 203) eine Funktion des Gasdichte-Relais vervollständigt; und
wenn der Gasdichtewert in den Normalzustand zurückkehrt, das Bourdonrohr (6) und das Temperaturkompensationselement (7) eine Vielzahl von entsprechenden Verschiebungen erzeugen, wobei die Vielzahl von entsprechenden Verschiebungen das Mikroschalter-Kontaktauslöseelement (201, 202, 203) durch den Signalauslösemechanismus antreibt; das Mikroschalter-Kontaktauslöseelement (201, 202, 203) in einen Zustand zurückgesetzt wird, wenn die Gasdichte normal ist.

2. Das hochpräzise Gasdichterelais nach Anspruch 1l, umfassend ferner ein Anzeigewerk, ein Zifferblatt und einen Zeiger, wobei ein erstes Ende des Temperaturkompensationselements (7) über eine Anzeigeverbindungsstange mit dem Anzeigewerk verbunden ist oder das erste Ende des Temperaturkompensationselements (7) direkt mit dem Anzeigewerk verbunden ist und der Zeiger auf dem Anzeigewerk und vor dem Zifferblatt angebracht ist.

3. Das hochpräzise Gasdichterelais nach Anspruch 1, umfassend ferner ein Begrenzungsstück, wobei das Begrenzungsstück den Signaleinstellmechanismus (12) so begrenzt, dass er sich in einem bestimmten Bereich bewegt, und eine Bewegung des Mikroschalter-Kontaktauslöseelements (201, 202, 203) innerhalb eines elastischen Bereichs des Mikroschalter-Kontaktauslöseelements (201, 202, 203) liegt.

4. Das hochpräzise Gasdichterelais nach Anspruch 1, wobei der Signaleinstellmechanismus (12) mit einer Einstellschraube versehen ist.

5. Das hochpräzise Gasdichterelais nach Anspruch 1, umfassend ferner einen Pufferausgleichsmechanismus, wobei der Pufferausgleichsmechanismus die Vibrationsfestigkeit des hochpräzisen Gasdichterelais verbessert.

6. Das hochpräzise Gasdichterelais nach Anspruch 1, wobei das Mikroschalter-Kontaktauslöseelement (201, 202, 203) in einer geraden oder einer gebogenen Form ist.

7. Das hochpräzise Gasdichterelais nach Anspruch 1, wobei eine relative Position des Mikroschalter-Kontaktauslöseelements (201, 202, 203) und des Mikroschalters der Vielzahl von Mikroschaltern (91, 92, 93) horizontal oder geneigt ist.

8. Das hochpräzise Gasdichterelais nach Anspruch 1, wobei eine effektive Breite eines Abschnitts eines vorderen Endes des Mikroschalter-Kontaktauslöseelements (201, 202, 203) in Kontakt mit dem Signaleinstellmechanismus (12) 3-18 mm beträgt.

9. Das hochpräzise Gasdichterelais nach Anspruch 1, umfassend ferner einen Begrenzungsmechanismus; wenn das hochpräzise Gasdichterelais einer Vibration unterworfen wird, sorgt der Begrenzungsmechanismus dafür, dass sich der Signaleinstellmechanismus (12) innerhalb eines normalen Arbeitsbereichs bewegt, und der Begrenzungsmechanismus begrenzt den Signaleinstellmechanismus (12) auf eine eingestellte Position, wobei in der eingestellten Position ein entsprechender Dichtewert größer als ein Alarmdichtewert ist.

10. Das hochpräzise Gasdichterelais nach Anspruch 1, umfassend ferner ein Hilfsteil, das an einem mittleren und einem vorderen Ende des Mikroschalter-Kontaktauslöserelements (201, 202, 203) befestigt ist, wobei das Hilfsteil eine lokale Steifigkeit des Mikroschalter-Kontaktauslöserelements (201, 202, 203) aus einem elastischen Material verbessert.

11. Das hochpräzise Gasdichterelais nach Anspruch 1, wobei eine Teilbreite des Mikroschalter-Kontaktauslöseelementes (201, 202, 203) aus einem elastischen Material reduziert ist, oder die Teilbreite des Mikroschalter-Kontaktauslöseelementes (201, 202, 203) in Form einer Kerbe ist, oder die Teilbreite des Mikroschalter-Kontaktauslöseelementes (201, 202, 203) in Form eines Loches ist.

12. Das hochpräzise Gasdichterelais nach Anspruch 1, wobei das Temperaturkompensationselement (7) ein Bimetallstreifen oder ein gasgefülltes Bourdonrohr ist.

13. Das hochpräzise Gasdichterelais nach Anspruch 1, wobei der unabhängige Signalkontrollteil mit einem Anti-Fehlbedienungsmechanismus versehen ist.

14. Das hochpräzise Gasdichterelais nach Anspruch 1, wobei das hochpräzise Gasdichterelais ferner einen Drucksensor, einen Temperatursensor, eine Signalverarbeitungseinheit und eine Signalübertragungseinheit umfasst, wobei die Signalübertragungseinheit ein Fernsignal sendet, um eine Online-Dichteüberwachung zu realisieren.

15. Ein Verfahren zur Verbesserung der Genauigkeit des Gasdichterelais, wobei das Gasdichterelais umfasst:
ein Gehäuse (3), eine im Gehäuse (3) angeordnete Basis (19), einen Endsitz (18), ein Bourdonrohr (6), ein Temperaturkompensationselement (7), einen Signaleinstellmechanismus (12) und eine Vielzahl von Mikroschaltern (91, 92, 93),
wobei die mehreren Mikroschalter (91, 92, 93) als Signalgeneratoren verwendet werden, ein erstes Ende des Bourdonrohrs (6) mit der Basis (19) verbunden ist, ein zweites Ende des Bourdonrohrs (6) mit dem Endsitz (18) verbunden ist, ein erstes Ende des Temperaturkompensationselements mit dem Endsitz (18) verbunden ist, ein zweites Ende des Temperaturkompensationselements mit dem Signaleinstellmechanismus (12) verbunden ist; **dadurch gekennzeichnet, dass**
der Mikroschalter der Vielzahl von Mikroschaltern (91, 92, 93) ein Tastenmikroschalter ist;
das Gasdichterelais ferner ein Mikroschalter-Kontaktauslöseelement (201, 202, 203) aus einem elastischen Material umfasst,
ein erstes Ende des Mikroschalter-Kontaktauslöseelementes (201, 202, 203) im Inneren des Gehäuses (3) befestigt ist, wobei ein zweites Ende des Mikroschalter-Kontaktauslöseelementes (201, 202, 203) entsprechend einer Taste (9101, 9201, 9301) des Tasten-Mikroschalters angeordnet ist und an der Taste (9101, 9201, 9301) jedes Mikroschalters der Vielzahl von Mikroschaltern (91, 92, 93) in Eins-zu-Eins-Entsprechung anliegt;
wenn sich der Gasdichtewert ändert, das Bourdonrohr (6) und das Temperaturkompensationselement (7) eine Vielzahl von Verschiebungen erzeugen, wobei die Vielzahl von Verschiebungen das Mikroschalter-Kontaktauslöseelement (201, 202, 203) durch den Signalauslösemechanismus antreibt; wenn der Gasdichtewert einen entsprechenden Sollwert erreicht, das Mikroschalter-Kontaktauslöseelement (201, 202, 203) die Taste (9101, 9201, 9301) des Mikroschalters der Vielzahl von Mikroschaltern (91, 92, 93) drückt oder sich von ihm wegbewegt, wodurch der Mikroschalter der Vielzahl von Mikroschaltern (91, 92, 93) veranlasst, ein entsprechendes Signal zu erzeugen, indem der Mikroschalter der Vielzahl von Mikroschaltern (91, 92, 93) veranlasst wird, das entsprechende Signal zu erzeugen, vervollständigt das Mikroschalter-Kontaktauslöseelement (201, 202, 203) die Funktion des Gasdichterelais;
wenn der Gasdichtewert in den Normalzustand zurückkehrt, das Bourdonrohr (6) und das Temperaturkompensationselement (7) eine Vielzahl von entsprechenden Verschiebungen erzeugen, wobei die entsprechenden Verschiebungen das Mikroschalter-Kontaktauslöseelement (201, 202, 203) durch den Signalauslösemechanismus antreiben, und das Mikroschalter-Kontaktauslöseelement (201, 202, 203) in einen Zustand zurückgesetzt wird, wenn die Gasdichte normal ist.

16. Das Verfahren zur Verbesserung der Genauigkeit des Gasdichterelais nach Anspruch 15, wobei
wenn der Signalauslösemechanismus eine Auslenkung erzeugt, erzeugt das Mikroschalter-Kontaktauslöseelement (201, 202, 203) entsprechend eine Auslenkung durch eine elastische Kraft des Mikroschalter-Kontaktauslöseelementes (201, 202, 203) oder durch eine Schubkraft des Signalauslösemechanismus; wenn ein eingestellter Wert erreicht wird, gibt der Mikroschalter der Vielzahl von Mikroschaltern (91, 92, 93) einen entsprechenden Alarm oder ein Verriegelungssignal aus; und wenn der Gasdichtewert normal ist, wird das Mikroschalter-Kontaktauslöseelement (201, 202, 203) in einen Zustand zurückgesetzt, in dem die Gasdichte normal ist.

## Revendications

1. Relais de densité de gaz de haute précision, comprenant :
un boîtier (3), une base (19) disposée dans le boîtier (3), un siège d'extrémité (18), un tube de Bourdon (6), un élément de compensation de température (7), un mécanisme de réglage de signal (12) et une pluralité de microcommutateurs (91, 92, 93),
dans lequel la pluralité de microcommutateurs (91, 92, 93) sont utilisés comme générateurs de signaux, une première extrémité du tube de Bourdon (6) étant connectée à la base (19), une deuxième extrémité du tube de Bourdon (6) étant connectée au siège d'extrémité (18), une première extrémité de l'élément de compensation de température (7) étant connectée au siège d'extrémité (18), une deuxième extrémité de l'élément de compensation de température (7) étant connectée au mécanisme de réglage de signal (12) ; **caractérisé en ce que**,
un microcommutateur de la pluralité de microcommutateurs (91, 92, 93) est un microcommutateur à bouton ;
le relais de densité de gaz de haute précision comprend en outre un élément de déclenchement de contact de microcommutateur (201, 202, 203) fait d'un matériau élastique, une première extrémité de l'élément de déclenchement de contact de microcommutateur (201, 202, 203) étant fixée à l'intérieur du boîtier (3), une deuxième extrémité de l'élément de déclenchement de contact de microcommutateur (201, 202, 203) étant disposée en correspondance avec un bouton (9101, 9201, 9301) de microcommutateur à bouton et venant en butée contre le bouton (9101, 9201, 9301) de chaque microcommutateur de la pluralité de microcommutateurs (91, 92, 93) en correspondance un à un ;
lorsqu'une valeur de densité de gaz change, le tube de Bourdon (6) et l'élément de compensation de température (7) génèrent une pluralité de déplacements, dans lequel la pluralité de déplacements entraîne l'élément de déclenchement de contact de microcommutateur (201, 202, 203) par le biais d'un mécanisme de déclenchement de signal ; lorsque la valeur de densité de gaz atteint une valeur de consigne correspondante, l'élément de déclenchement de contact de microcommutateur (201, 202, 203) appuie sur ou s'éloigne du bouton (9101, 9201, 9301) de microcommutateur de la pluralité de microcommutateurs, amenant le microcommutateur de la pluralité de microcommutateurs (91, 92, 93) à générer un signal correspondant, en amenant le microcommutateur de la pluralité de microcommutateurs (91, 92, 93) à générer le signal correspondant, l'élément de déclenchement de contact de microcommutateur (201, 202, 203) complète une fonction du relais de densité de gaz ; et
lorsque la valeur de densité de gaz revient à la normale, le tube de Bourdon (6) et l'élément de compensation de température (7) génèrent une pluralité de déplacements correspondants, dans lequel la pluralité de déplacements correspondants entraîne l'élément de déclenchement de contact de microcommutateur (201, 202, 203) par le biais le mécanisme de déclenchement de signal ; l'élément de déclenchement de contact de microcommutateur (201, 202, 203) est remis à un état lorsque la densité de gaz est normale.

2. Relais de densité de gaz de haute précision selon la revendication 1, comprenant en outre un affichage du mouvement, un cadran et une aiguille, dans lequel une première extrémité de l'élément de compensation de température (7) est connectée à l'affichage du mouvement par le biais d'une bielle d'affichage ou la première extrémité de l'élément de compensation de température (7) est directement connectée à l'affichage du mouvement, et l'aiguille est montée sur l'affichage du mouvement et devant le cadran.

3. Relais de densité de gaz de haute précision selon la revendication 1, comprenant en outre une pièce de limitation, dans lequel la une pièce de limitation limite le mécanisme de réglage de signal (12) pour se déplacer dans une certaine plage, et un mouvement de l'élément de déclenchement de contact de microcommutateur (201, 202, 203) est dans une plage élastique de l'élément de déclenchement de contact de microcommutateur (201, 202, 203).

4. Relais de densité de gaz de haute précision selon la revendication 1, dans lequel le mécanisme de réglage de signal (12) est pourvu d'une vis de réglage.

5. Relais de densité de gaz de haute précision selon la revendication 1, comprenant en outre un mécanisme d'équilibrage de tampon, dans lequel le mécanisme d'équilibrage de tampon améliore un niveau de résistance aux vibrations du relais de densité de gaz de haute précision.

6. Relais de densité de gaz de haute précision selon la revendication 1, dans lequel l'élément de déclenchement de contact de microcommutateur (201, 202, 203) a une forme droite ou courbée.

7. Relais de densité de gaz de haute précision selon la revendication 1, dans lequel une position relative de l'élément de déclenchement de contact de microcommutateur (201, 202, 203) et le microcommutateur de la pluralité de microcommutateurs (91, 92, 93) est horizontale ou inclinée.

8. Relais de densité de gaz de haute précision selon la revendication 1, dans lequel une largeur effective d'une portion d'une extrémité avant de l'élément de déclenchement de contact de microcommutateur (201, 202, 203) en contact avec le mécanisme de réglage de signal (12) est de 3-18 mm.

9. Relais de densité de gaz de haute précision selon la revendication 1, comprenant en outre un mécanisme de limitation ; lorsque le relais de densité de gaz de haute précision est soumis à une vibration, le mécanisme de limitation assure le déplacement du mécanisme de réglage de signal (12) dans une plage de travail normale, et le mécanisme de limitation limite le mécanisme de réglage de signal (12) à une position de consigne, dans lequel à la position de consigne, une valeur de densité correspondante est supérieure à une valeur de densité d'alarme.

10. Relais de densité de gaz de haute précision selon la revendication 1, comprenant en outre un membre auxiliaire fixé à une extrémité centrale et une extrémité avant de l'élément de déclenchement de contact de microcommutateur (201, 202, 203), dans lequel le membre auxiliaire améliore une rigidité locale de l'élément de déclenchement de contact de microcommutateur (201, 202, 203) fait d'un matériau élastique.

11. Relais de densité de gaz de haute précision selon la revendication 1, dans lequel une largeur partielle de l'élément de déclenchement de contact de microcommutateur (201, 202, 203) fait d'un matériau élastique est réduite, ou la largeur partielle de l'élément de déclenchement de contact de microcommutateur (201, 202, 203) est sous la forme d'une encoche, ou la largeur partielle de l'élément de déclenchement de contact de microcommutateur (201, 202, 203) est sous la forme d'un trou.

12. Relais de densité de gaz de haute précision selon la revendication 1, dans lequel l'élément de compensation de température (7) est une bande bimétallique ou un tube de Bourdon rempli de gaz.

13. Relais de densité de gaz de haute précision selon la revendication 1, dans lequel la partie de commande de signal indépendante est pourvue d'un mécanisme anti-mauvaise opération.

14. Relais de densité de gaz de haute précision selon la revendication 1, dans lequel le relais de densité de gaz de haute précision comprend en outre un capteur de pression, un capteur de température, une unité de traitement du signal et une unité de transmission du signal, dans lequel l'unité de transmission du signal envoie un signal à distance pour réaliser une surveillance en ligne de la densité.

15. Procédé pour améliorer une précision du relais de densité de gaz, dans lequel le relais de densité de gaz comprend :
un boîtier (3), une base (19) disposée dans le boîtier (3), un siège d'extrémité (18), un tube de Bourdon (6), un élément de compensation de température (7), un mécanisme de réglage de signal (12) et une pluralité de microcommutateurs (91, 92, 93),
dans lequel la pluralité de microcommutateurs (91, 92, 93) sont utilisés comme générateurs de signaux, une première extrémité du tube de Bourdon (6) étant connectée à la base (19), une deuxième extrémité du tube de Bourdon (6) étant connectée au siège d'extrémité (18), une première extrémité de l'élément de compensation de température étant connectée au siège d'extrémité (18), une deuxième extrémité de l'élément de compensation de température étant connectée au mécanisme de réglage de signal (12) ;
**caractérisé en ce que**,
le microcommutateur de la pluralité de microcommutateurs (91, 92, 93) étant un microcommutateur à bouton ;
le relais de densité de gaz comprenant en outre un élément de déclenchement de contact de microcommutateur (201, 202, 203) fait d'un matériau élastique,
une première extrémité de l'élément de déclenchement de contact de microcommutateur (201, 202, 203) étant fixée à l'intérieur du boîtier (3), une deuxième extrémité de l'élément de déclenchement de contact de microcommutateur (201, 202, 203) étant disposée en correspondance avec un bouton (9101, 9201, 9301) de microcommutateur à bouton et venant en butée contre le bouton (9101, 9201, 9301) de chaque microcommutateur de la pluralité de microcommutateurs (91, 92, 93) en correspondance un à un ;
lorsque la valeur de densité de gaz change, le tube de Bourdon (6) et l'élément de compensation de température (7) génèrent une pluralité de déplacements, dans lequel la pluralité de déplacements entraîne l'élément de déclenchement de contact de microcommutateur (201, 202, 203) par le biais du mécanisme de déclenchement de signal ; lorsque la valeur de densité de gaz atteint une valeur de consigne correspondante, l'élément de déclenchement de contact de microcommutateur (201, 202, 203) appuie sur ou s'éloigne du bouton (9101, 9201, 9301) de microcommutateur de la pluralité de microcommutateurs (91, 92, 93), amenant le microcommutateur de la pluralité de microcommutateurs (91, 92, 93) à générer un signal correspondant, en amenant le microcommutateur de la pluralité de microcommutateurs (91, 92, 93) à générer le signal correspondant, l'élément de déclenchement de contact de microcommutateur (201, 202, 203) complète la fonction du relais de densité de gaz ;
lorsque la valeur de densité de gaz revient à la normale, le tube de Bourdon (6) et l'élément de compensation de température (7) génèrent une pluralité de déplacements correspondants, dans lequel les déplacements correspondants entraîne l'élément de déclenchement de contact de microcommutateur (201, 202, 203) par le biais le mécanisme de déclenchement de signal ; et l'élément de déclenchement de contact de microcommutateur (201, 202, 203) est remis à un état lorsque la densité de gaz est normale.

16. Procédé pour améliorer la précision du relais de densité de gaz selon la revendication 15, dans lequel,
lorsque le mécanisme de déclenchement de signal génère un déplacement, l'élément de déclenchement de contact de microcommutateur (201, 202, 203) génère un déplacement en conséquence par le biais d'une force élastique de l'élément de déclenchement de contact de microcommutateur (201, 202, 203) ou par le biais d'une poussée du mécanisme de déclenchement de signal ; lorsqu'une valeur de consigne est atteinte, le microcommutateur de la pluralité de microcommutateurs (91, 92, 93) émet une alarme correspondante ou un signal de verrouillage ; et lorsque la valeur de densité de gaz est normale, l'élément de déclenchement de contact de microcommutateur (201, 202, 203) est remis à un état lorsque la densité de gaz est normale.
